## Europäisches Patentamt

## European Patent Office

## Office européen des brevets

(11) Veröffentlichungsnummer: **0 322 875**

**A2**

(12) **EUROPÄISCHE PATENTANMELDUNG**

(21) Anmeldenummer: 88121743.4

(22) Anmeldetag: 28.12.88

(51) Int. Cl.⁴ **F16L 3/12**

(30) Priorität: 31.12.87 DE 3744634

(43) Veröffentlichungstag der Anmeldung:
05.07.89 Patentblatt 89/27

(84) Benannte Vertragsstaaten:
**AT CH DE LI**

(71) Anmelder: **KOLTHOFF & CO.**
**Flüelerstrasse 19**
**CH-6460 Altdorf(CH)**

(72) Erfinder: **Kolthoff, Dieter**
**Flüelerstrasse 19**
**CH-6460 Altdorf(CH)**
Erfinder: **Scherbeitz, Jürgen**
**Willenberg 72**
**D-2840 Diepholz(DE)**

(74) Vertreter: **Busse & Busse Patentanwälte**
**Postfach 1226 Grosshandelsring 6**
**D-4500 Osnabrück(DE)**

(54) **Klemmelement und Vorrichtung zum Verankern von Klemmelementen.**

㊛ Ein Klemmelement für eine Verankerung in Materialien geringer Zugfestigkeit, insbesondere in Isoliermaterial verankerbare Klemmschelle für Fußbodenheizungsrohre, mit einer oberseitig einen Klemmkopf mit zwei Klemmschenkeln und unterseitig einen Verankerungsteil tragenden Stützplatte wird im Sinne einer leichten Verlegearbeit und großer Sicherheit gegen Beschädigungen der Isolierung so ausgestaltet, daß der Verankerungsteil als ein nach unten sich im Querschnitt verjüngender Schraubenfuß gestaltet ist, daß die Stützplatte unterseitig eine Randanlage bildet und sich in Richtung der Klemmschenkel erstreckt, wobei sie eine elastisch verformbare Verbindung zwischen den Klemmschenkeln bildet. Weiterhin ist eine Vorrichtung zum Verankern von Klemmelementen mit einem Klemmkopf und einem Schraubenfuß, die mit einem Setzwerkzeug und vorzugsweise einen vor dem Setzwerkzeug ausmündenden Magazin für Klemmelemente ausgestattet ist, zum Zwecke eines schnellen und einfachen Arbeitens mit den Klemmelementen geschaffen worden, bei der das Setzverkzeug einen Drillschaft mit einem formschlüssig ein Klemmelement am Klemmkopf erfassenden Schlüsselfuß aufweist.

Fig. 3

## Klemmelement und Vorrichtung zum Verankern von Klemmelementen

Die Erfindung betrifft ein Klemmelement nach dem Oberbegriff des Anspruchs 1 sowie eine Vorrichtung zum Verankern von Klemmelementen nach dem Oberbegriff des Anspruchs 9.

Klemmelemente der hier in Betracht gezogenen Art werden insbesondere in großen Stückzahlen bei der Verlegung von Fußbodenheizungsrohren verwandt, um letztere oberhalb einer Isolierschicht wie etwa aus Polystyrol-Hartschaumplatten, die regelmäßig noch mit einer Folie kaschiert oder abgedeckt sind, zu halten. Wenngleich die Klemmelemente dabei ihre Funktion schon beim nächsten Arbeitsgang, nämlich dem Vergießen in einen Estrich, verlieren, müssen sie unterschiedlichen, kritischen Anforderungen genügen. Generell wird von ihnen erwartet, daß sie die unter Spannung verlegten Rohre mit einer zuverlässigen Verankerung in dem Isoliermaterial halten, daß sie einfach und schnell - möglichst mit einem Verlegegerät - zu setzen sind und daß sie als Massenartikel kostengünstig - möglichst einstückig aus Kunststoff - zu fertigen sind.

Ein bekanntes Klemmelement der hier in Betracht zu ziehenden Art besteht aus einem Klemmkopf, einer Fußplatte und einem mit einer hinterschnittenen Spitze versehenen Befestigungsdorn an der Unterseite der Fußplatte, mit der ein solches Klemmelement insbesondere durch feste gelochte Folienkaschierungen von Isolierplatten hindurchgetrieben werden kann (DE-PS 3028101). Die Handhabung ist allerdings umständlich, da das Klemmelement zielgerecht von Hand gesetzt werden muß. Überdies muß die Kaschierung der Isolierstoffplatte den Festigkeitsanforderungen an die Schelle Rechnung tragen können.

Für eine schnellere, bequemere und zuverlässigere Verlegung haben sich in jüngerer Zeit Verankerungselemente in Form U-förmiger Verankerungsbügel mit Widerhaken an beiden U-Schenkeln durchgesetzt, die mit einem Verlegegerät setzbar sind und dann das Rohr wie eine Krampe niederhalten und umgreifen. Nachteilig bei diesen Verankerungselementen ist zunächst hinsichtlich der Handhabung, daß das Rohr in seiner Sollage gehalten werden muß, während das Klemmelement gesetzt wird. Dies kompliziert und verlangsamt die Arbeitsweise. Auch wird das Rohr gegen die Isolierung gedrückt und nur bereichsweise in Estrich eingebettet, was den Wärmeaustrag mindert. Nachteilig aber ist insbesondere, daß das Einstechen der U-Schenkel mitsamt Widerhaken Öffnungen im Isolierstoff und Risse in Abdeckfolien erzeugt, durch die hindurch Estrich oder dergleichen Verußmasse in das Isoliermaterial eindringen oder durch dieses hindurchdringen kann. Damit jedoch kann das Isoliermaterial sowohl hinsichtlich seiner Wärmeisolierung wie auch hinsichtlich seiner Schallisolierung erheblichen Schaden nehmen.

Für die vorbeschriebenen Klemmelemente sind Verlegeeinrichtungen bekannt, die nach dem Prinzip sogenannter "Tacker" arbeiten, wie sie schon langzeitig beim Heften von Holz oder Pappe bekannt sind. Derartige Verlegeeinrichtungen sind allerdings an die einfache Krampen-Form der bekannten Klemmelemente gebunden und auch in ihrer Funktion darauf beschränkt, diese gradlinig vorwärts in das Material einzudrücken.

Aufgabe der Erfindung ist es, ein Klemmelement zu schaffen, welches die Verlegearbeit erleichtert und eine größere Sicherheit gegen Beschädigungen der Isolierung bietet, ohne daß dafür die Vorteile einer preisgünstigen Herstellbarkeit und gerätetechnischen Verarbeitbarkeit aufgegeben werden müßten. Aufgabe der Erfindung ist es weiterhin, eine Vorrichtung zu schaffen, die ein schnelles und einfaches Arbeiten mit Klemmelementen solcher Art ermöglicht.

Gemäß der Erfindung wird die vorstehende Aufgabenstellung von einem Klemmelement nach dem Oberbegriff des Anspruchs 1 ausge hend mit den kennzeichnenden Merkmalen des Anspruchs 1 gelöst. Weiterhin wird die Aufgabenstellung von einer Vorrichtung nach dem Oberbegriff des Anspruchs 9 ausgehend mit den kennzeichnenden Merkmalen des Anspruchs 9 gelöst.

Ein Klemmelement mit einem Klemmkopf und einem Verankerungsfuß gewährt die grundsätzliche und wichtige Möglichkeit, die benötigten Klemmelemente zunächst für sich zu setzen, ohne gleichzeitig das Rohr verlegen zu müssen. Das Heizungsrohr ist einfacher und schneller danach in die Klemmhalterungen einzudrücken. Ein weiterer Vorteil derartiger Klemmhalterungen ist, daß das Rohr um die Stärke der Stützplatte vom Untergrund, etwa von Isolierplatten, abgesetzt ist. Bei Fußbodenheizungen entsteht also der Vorteil, daß das zunächst freiliegende Rohr auch unterseitig von Estrich umschlossen wird, was die Wärmeaustragung vom Rohr her fördert.

Dabei hat sich herausgestellt, daß ein Schraubenfuß, der an sich in der Verwindungstechnik bei der Holzschraube oder beim Korkenzieher eine breite Verwendung findet, gerade in der Verbindung mit der Stützplatte in einer Weise zusammenwirkt, die der Verankerung in Isolierplatten eine besondere Sicherheit gibt. Noch bedeutsamer ist, daß ein Schraubenfuß mit einem sich nach unten verjüngenden Querschnitt keine unausgefüllten Einstichkanäle hinterläßt, durch die hindurch später beim Verguß eines Estrichs Material eindringen kann, welches die Isolierung durchbricht und überbrückt. Der Schraubenfuß ist in der Lage, den Einstichbereich zu versperren.

Zusätzlich liefert die Stützplatte eine Abdeckung des Einstichbereichs. Wird diese Stützplatte durch Einbringen eines Rohres nachträglich weiterverformt, ergibt sich auch ein zusätzlicher Anpressdruck äußerer Plattenbereiche nach unten, die die Dichtung noch verbessern.

Weitere vorteilhafte Ausgestaltungen des Klemmelements ergeben sich aus den Ansprüchen 2 bis 8.

Eine Vorrichtung gemäß Anspruch 9, insbesondere zum Setzen von Klemmelementen der vorbetrachteten Art, aber auch zum schnellen Setzen anderer Elemente mit einem Schraubenfuß, schafft eine schnelle Arbeitsweise mit einer kombinierten Dreh-und Vorschubbewegung, wobei grundsätzlich zur Wahl steht, ob die Betätigung von Hand oder von einem Motor - etwa einem Elektromotor oder Druckluftmotor - erfolgt. In besonders einfacher und robuster Ausführungsform wird eine von Hand zu betätigende Vorrichtung vorgesehen, in der der Drillschaft axial niedergedrückt wird und dabei seine Längsbewegung über ein Bewegungsgewinde in eine zusätzliche Drehbewegung umsetzt. Es versteht sich, daß der Drillschaft selbst und/oder eine den Drillschaft umschließende Buchse mit dem Bewegungsgewinde ausgestattet sein kann.

Weitere Merkmale der Vorrichtung ergeben sich aus den Ansprüchen 10 bis 20.

Ausführungsbeispiele des Gegenstands der Erfindung sind in der Zeichnung dargestellt und werden nachfolgend näher beschrieben. In der Zeichnung zeigen:

Fig. 1 Seitenansicht eines Klemmelements

Fig. 2 Draufsicht auf das Klemmelement nach Fig. 1

Fig. 3 teilweise schnittbildliche Seitenansicht einer Vorrichtung zum Verankern von Klemmelementen

Fig. 4 Detailansicht der Vorrichtung nach Fig. 3, aus Richtung der Pfeile IV-IV gesehen

Fig. 5 Schnitt nach Linie V-V in Fig. 3.

Fig. 6 teilweise schnittbildliche Seitenansicht einer zweiten Vorrichtung zum Verankern von Klemmelementen

Fig. 7 Vorrichtung nach Anspruch 6 in gedrehter Seitenansicht (teilweise schnittbildlich)

Fig. 8 Schnitt nach Linie VIII-VIII in Fig. 7 und

Fig. 9 Schnitt nach Linie IX-IX in Fig. 6.

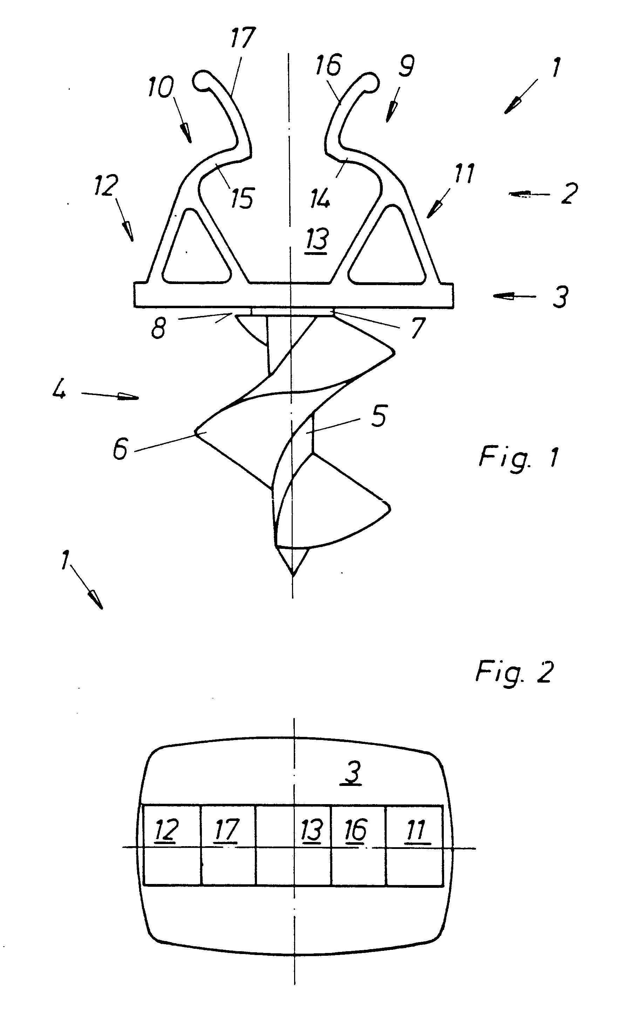

Das in den Figuren 1 und 2 dargestellte, insgesamt mit 1 bezeichnete Klemmelement gliedert sich in einen Klemmkopf 2, eine Stützplatte 3 und einen Verankerungsteil 4. Zentrales Element ist dabei die Stützplatte 3 insofern, als sie sowohl den Klemmkopf 2 wie auch den Verankerungsteil 4 trägt und mit beiden funktionell zusammenwirkt.

Der Verankerungsteil ist als Schraubenfuß 4 ausgebildet, und zwar nach Art einer Schnecke mit einem durchlaufenden Zentralschaft 5, der dem Schraubenfuß Steifigkeit und Festigkeit gibt, zumal das Klemmelement insgesamt einstückig als Kunststoff-Spritzgußteil ausgebildet ist. Eine unter Verankerungsgesichtspunkten möglicherweise vorzuziehende wendelartige Ausbildung des Schraubenfußes - auch mit einer Wendel, die einen Innenbereich frei beläßt - käme ggf. bei Verwendung von Materialien höherer Festigkeit in Betracht.

Der Schraubenfuß besitzt einen generell sich von oben nach unten verjüngenden Querschnitt, wobei dieser in einem oberen Teil allerdings im wesentlichen gleichbleibt und erst im unteren Teil stärker zusammenläuft. Insgesamt aber verjüngt sich sowohl der Querschnitt des Schafts 5 wie auch eine an diesen angeformte Schnecke 6 von oben nach unten. Zur Stützplatte 3 hin ist ein verengter Übergang mit einem kurzen Ansatz 7 kreisförmigen Querschnitts geschaffen, wo die Schnecke 6 mit einer entsprechenden Ringnut 8 zurückgenommen ist.

Die darüberliegende Stützplatte 3 hat, wie aus Fig. 2 ersichtlich, einen etwa ovalen, also nicht runden Querschnitt, der näherungsweise die Grundform einer auf zwei einander gegenüberliegenden Seiten symmetrisch beschnittenen Kreisfläche hat. In Richtung der größeren Erstreckung der Stützplatte 3 sind zwei Klemmschenkel 9 und 10 eines Klemmkopfs angeformt, die unterseitig mit einem biegesteifen Schenkelansatz 11,12 in Form einer Dreiecksverstrebung in den Stützfuß übergehen. Zwischen den Dreiecksverstrebungen ist eine sich keilförmig nach unten verengende Aufnahme 13 geschaffen. Oberhalb der Schenkelansätze 11,12 gehen die Schenkel in einen elastisch nachgiebigen, stark zum anderen Schenkel hin abgebogenen Klammerarm 14 bzw. 15 über, der ein in den Klemmkopf aufzunehmendes Rohr im wesentlichen von oben erfaßt und in den keilförmigen Aufnahmeraum 13 hineindrückt. Die Klemmschenkel 9,10 setzen sich weiter nach oben in hörnerförmigen Führungsansätzen 16,17 fort, die zwischeneinander einen sich nach unten verengenden Einführbereich bilden.

Die Anwendung des Klemmelements 1 ist in erster Linie bei Fußbodenheizungen vorgesehen, bei denen Heizungsrohre aus Kunststoff oberhalb einer Isolierung zu verlegen sind, die zumindest eine Schicht aus Isolierplatten oder -matten, etwa aus Polystyrol-Hartschaum - aufweist und die oberseitig eine Folienkaschierung oder Folienabdeckung tragen, um das Eindringen von Wasser und Estrich beim nachfolgenden Vergießen der Fußbodenheizung auszuschließen.

Das Klemmelement 1 bildet ein geeignetes und vorteilhaftes Verankerungselement, um Heizungsrohre, in vorgegebener Weise gelegt und gebogen, auf der Isolierung zu fixieren. An jedem der vorgegebenen Fixierungspunkte wird ein solches Klemmelement in die Isolierung hineingedreht, wobei der Schraubenfuß eine Verankerungs schafft, die insbesondere nach oben wirkende Zugkräfte aufnimmt. In Verbindung mit der Stützplatte 3, die beim Eindrehen des Schraubenfußes 4 in die Isolierung auf die Oberfläche gepreßt wird, ergibt sich eine flächige und steife Verankerung, die auch seitliche Biegemomente und Querkräfte aufzufangen vermag.

Bedeutsam ist dabei hinsichtlich des Querschnittsverlaufs des Schraubenfußes 4, daß dieser nach unten hin zumindest im wesentlichen abnimmt.

Der in eine Isolierung eingedrehte Schraubenfuß 4 verdrängt dabei Material aus einem Raum nach außen, der vom Schraubenfuß eingenommen wird. Die Verankerung hinterschneidet also das teilweise verdrängte Material, ohne dabei offene Eindringbereiche zu hinterlassen. Insofern unterscheidet sich diese Verankerung von bekannten Verankerungen mit Pfeilköpfen und Widerhaken, die einen teilweise offenen Eindringquerschnitt hinterlassen. Von besonderem Vorteil ist auch die Ringnut 8, die den regelmäßig anzutreffenden Fall berücksichtigt, daß Isolierstoffplatten oder -matten oberseitig mit einer zäheren Folie kaschiert oder belegt sind. Beim Eindrehen des Klemmelements kann eine solche Folie, die sich weniger als das Isoliermaterial zur Seite abdrängen läßt, sich in die Ringnut 8 einschieben. Dort findet sie dann eine Aufnahme, die auch die flache Anlage der Stützplatte auf der Isolierung nicht beeinträchtigt.

Für den festen Sitz des Klemmelements ist es wichtig, daß die Stützplatte eine Sicherung gegen ein Herausdrehen bietet. In dieser Hinsicht ist der unrunde, langgestreckte Querschnitt von Bedeutung, der infolge seiner Langerstreckung höhere Rückdrehmomente abzufangen erlaubt und der auch quer bzw. schräg zur Tangentialrichtung verlaufende Kanten aufweist, die der Stützplatte auf der Isolierung Halt gegen ein Rückdrehen bieten. Diese Sicherung wird erreicht, ohne eine weitere Funktion der Stützplatte zu gefährden, die, von oben auf die Isolierung aufgepreßt, eine zusätzliche Abdichtung gegen das Eindringen von Wasser und Estrich in die Isolierung schafft. Hierzu ist die Stützplatte 3 vorzugsweise an der Unterfläche unprofiliert ausgebildet.

Ist ein Klemmelement 1 in der vorgeschriebenen Weise gesetzt, dann kann es ein Rohr aufnehmen, das nachträglich von oben eingedrückt wird. Zwischen den hörnerartigen Führungsansätzen 16,17 gelangt der Rohrquerschnitt in die Aufnahme 13, wobei die Klammerarme 9,10 zunächst seitlich ausweichen und dann elastisch das Rohr umgreifen und niederdrücken. Im Zusammenwirken der keilförmigen Aufnahme mit den hochflexiblen Klammerarmen ergibt sich ein großer Durchmesserbereich einzusetzender Rohre: das Klemmelement ist für einen vorgegebenen Bereich von Rohren unterschiedlichen Durchmesser "universal" verwendbar. Mit der Aufnahme eines Rohrs werden die Schenkel des Klemmelements mehr oder weniger auseinandergespreizt und diese Spreizbewegung wird durch die biegesteife Dreiecksverstrebung 11,12 auf die Stützplatte 3 übertragen, die sich dann seitlich nach unten auslenkt und den Anpreßdruck gegen die Isolierung erhöht -sowohl die Dichtfunktion wie auch die Rückdrehsicherung der Stützplatte wird dadurch verbessert.

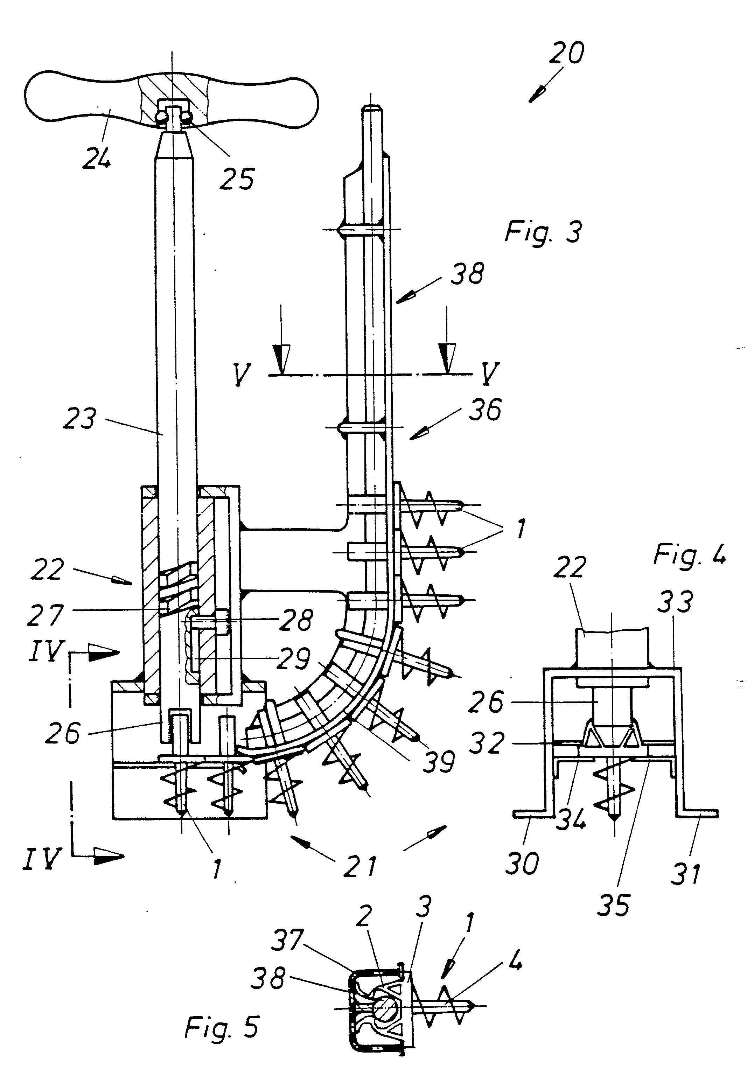

Eine in einer Gesamtansicht gemäß Fig. 3 insgesamt mit 20 bezeichnete Vorrichtung zum Verlegen von Klemmelementen mit einem Klemmkopf und einem Schraubenfuß, insbesondere von Klemmelementen 1 der vorstehend beschriebenen Art, umfaßt unterseitig eine Halterung 21 für Klemmelemente, die starr mit einer Lagerung 22 für einen Drillschaft 23 verbunden ist. Der Drillschaft ist nach oben verlängert aus der Lagerung 22 zu einem Handgriff 24 herausgeführt, der mit dem Drillschaft 23 über eine Drehlagerung 25 drehbeweglich verbunden ist.

Unterseitig endet der Drillschaft 23 in einem Schlüsselfuß 26, der auf die Klemmelemente oberseitig abgestimmt ist und diese von oben im Sinne eines Niederdrückens und Drehens erfassen kann. Im vorliegenden Fall, in dem Klemmelemente 1 der anhand der Fig. 1 und 2 erläuterten Form gesetzt werden sollen, ist der Schlüsselkopf so ausgebildet, daß er die Klemmschelle 2 beidseitig übergreift und die in Fig. 1 vorne- und hintenliegenden Kanten der Klemmschenkel als Schlüsselflächen benutzt. Es versteht sich allerdings bei der komplexen Gestaltung des Klemmelements, daß hier verschiedene Ausgestaltungen des Schlüsselfußes möglich sind, beispielsweise könnte auch ein Schlüsselfuß-Fortsatz in die Aufnahme 13 nach Art eines Schraubendrehers eingreifen.

Der Drillschaft 23 hat die Aufgabe, jeweils ein Klemmelement 1 in eine auf dem Boden verlegte Isolierung schraubenartig einzudrehen. Für eine solche Bewegung ist eine spindelförmige Ausgestaltung des Drillschaftes geeignet. Grundsätzlich kann allerdings auch der Drillschaft mit Führungsfortsätzen in ein Bewegungsgewinde einer zugehörigen Lagerung eingreifen oder es können beide, Drillschaft und Lagerung, mit ineinandergreifenden Gewindeabschnitten versehen sein.

Im vorliegenden Fall ist eine Ausgestaltung vorgezogen worden, bei der der Drillschaft selbst einen Gewindeabschnitt 27 aufweist, so daß dieses Gewinde an dem Teil geringeren Durchmessers (und damit größeren Steigungswinkels) liegt. Da die Gewindesteigung im Drillschaft auf die Gewindesteigung der Schnecke 6 des Verankerungsfußes am Klemmelement 1 abgestimmt ist, die eine Haltefunktion hat, muß für das Bewegungsgewinde 27 eine hinreichende Steigung gewährleistet sein.

In den Gewindeabschnitt 27 greift ein Führungsstift 28 ein, der fest mit der Lagerung verbunden ist. Mit einem zumindest vorderseitig rund ausgebildeten Querschnitt ist der Führungsstift nicht auf eine Ausrichtung auf die Steigung des Gewin desabschnittes 27 festgelegt. Dies ist auch wichtig insofern, als der Gewindeabschnitt 27 am unteren Ende in eine achsparallele Nut 29 übergeht.

In einer Ausgangslage ist der Drillschaft gegenüber der dargestellten Zwischenstellung noch so weit angehoben, daß dessen Schl(isselfuß insgesamt außer Eingriff mit und oberhalb von dem Klemmelement 1 liegt. Erst durch Niederdrücken, bei dem der Drillschaft noch keine Drehbewegung ausführt, sondern, in der Nut 29 gehalten, rein achsial niedergeht, gelangt der Drillschaft in die dargestellte Stellung, bei der der Schlüsselfuß 26 das Klemmelement 1 erfaßt.

Aus der dargestellten, teilweise niedergedrückten Position des Drillschafts 23 heraus beginnt dieser sich mit dem Niedergehen zu drehen, da der Führungsstift 28 in den Gewindeabschnitt 27 einläuft. Von da an wird das Klemmelement 1 unter gleichzeitiger Drehung nach unten aus der Halterung 21 herausbewegt und dringt dann schraubenartig in den Untergrund ein.

Wie aus Fig. 4 näher ersichtlich ist, weist die Halterung 21 insgesamt ein Hutprofil auf, bei dem die Unterkanten zu streifenförmigen Aufsetzflächen 30,31 geformt sind. Zwei anschließende, nach oben sich erstreckende Seitenflächen 32,33 stützen innenseitig je eine von zwei Auflageschienen 34,35 ab, die ebenengleich einen Spalt zwischeneinander freilassen, dessen Breite größer als die geringere Querabmessung des Klemmelements 1 ist. In der Ausgangsstellung liegt das Klemmelement mit den Außenbereichen der Stützplatte auf den Schienen auf und wird so in der Halterung 21 gehalten, bevor es eine erste Viertelumdrehung ausführt, um dann erst zwischen den Schienen 34 und 35 hindurchzugelangen.

Zur Beschleunigung und Erleichterung der Handhabung ist die Vorrichtung mit einem Magazin 36 ausgestattet, in dem die nacheinander zu verlegenden Klemmelemente 1 aufgereiht angeordnet sind. Die Querschnittsdarstellung gemäß Fig. 5 zeigt ein Klemmelement 1 mit Klemmschelle 2, Stützplatte 3 und Veran]<erungsfuß 4, welches von einem U-Profil 37 des Magazins 36 um die Klemmschelle 2 herum abgedeckt wird, wobei eine weitere Profilschiene 38 mit einem verbreiterten Kopf und einem schmalen Verbindungssteg starr mit dem U-Profil 37 verbunden ist und so in die Aufnahme 13 der Klemmschelle eingreift, daß diese unverlierbar gehalten ist.

Das Magazin 36 umfaßt einen graden oberen Teil 38, der etwa parallel zum Drillschaft 23 verläuft und einen unteren gebogenen und schließlich quer zum Drillschaft in die Halterung 21 einmündenden Endteil 39. Die besondere Form mit einem parallel zum Drillschaft verlaufenden Teil 38 schafft eine kompakte Bauform und, was noch wichtiger ist, eine Zuführbewegung von oben nach unten, so daß die Klemmelemente sich unter Eigengewicht zur Halterung 21 hin bewegen. Es versteht sich, daß grundsätzlich auch motorische oder federbetätigte Zuführhilfen eingesetzt werden könnten, wie sie etwa bei Büroheftern üblich sind.

Beim Übergang vom Magazin 36 in die Halterung 21 läuft die Halteschiene 38 des Magazins aus, in diesem Bereich wird das Klemmelement von den Schienen 34 und 35 der Halterung 21 übernommen und an der Unterfläche der Stützplatte 3 aufgelagert.

Die Halterung 21 löst somit zunächst mit Hilfe des Drillschafts 23 das Problem, dem Klemmelement mit einem schraubenförmigen Verankerungsfuß die kombinierte Schraubenbewegung mitzuteilen. Gleichzeitig ist es in der Lage, trotz dieser komplexen Arbeitsbewegung eine Bevorratung und Zuführung über ein Magazin vorzusehen, was die Arbeit weiterhin erleichtert.

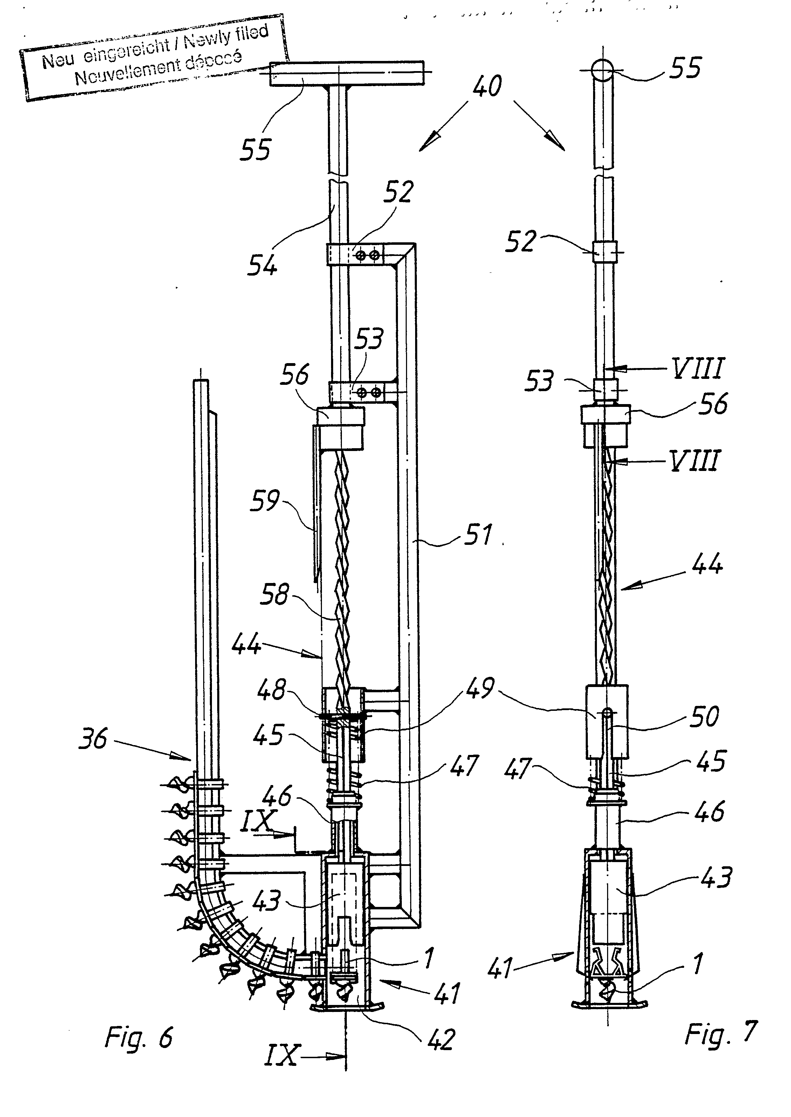

Eine in den Fig. 6 bis 9 dargestellte zweite Ausführungsform einer insgesamt mit 40 bezeichneten Vorrichtung weist wiederum ein Magazin für Klemmelemente auf, welches ganz entsprechend dem Magazin nach der Vorrichtung 20 ausgebildet sein kann und deshalb auch das gleiche Bezugszeichen 36 erhalten hat. Das Magazin mündet in eine Halterung 41 ein, die jeweils ein Klemmelement 1 in einer innenseitigen Ausstoßkammer 42 aufnimmt. Darüber ist in der Halterung 41 ein Schlüsselfuß 43 gelagert, der am unteren Ende einer Spindel 44 sitzt. Die Spindel 44 weist einen unteren zylindrischen Teil 45 auf, mit dem sie in einem Rohr 46 geführt ist, welches den oberen Abschluß der Halterung 41 bildet. Auf dem oberen Ende des Rohrs stützt sich eine Feder 47 ab, die am oberen Ende eine Nocken 48 in Form eines Querstabs durch die Spindel 44 untergreift und damit die Spindel nach oben drückt.

Der Nocken 48 durchgreift zu beiden Seiten eine die Spindel und einen Teil der Feder umschließende Führungsbuchse 49 mit zwei achsparallel von unten nach oben führenden Schlitzen 50, längs derer der Nocken mit zwei Endbereichen unter axialer Führung zwischen einer Endlage gemäß Fig. 6 und 7 und einer nach unten herausführenden Freigabe gleiten kann.

Die Führungsbuchse 49 ist über einen Rahmen 51 fest mit der Halterung 41 verbunden. Die Halterung 51 führt weiter nach oben und bildet dort zwei verdrehsichere Schiebeführungen 52,53 für eine Druckstange 54 aus einem rechteckigen bzw. quadratischen Rohr, an der oberseitig ein Griff 55 angebracht ist.

Die Druckstange 54 geht unterenends in ein Spindelmuttergehäuse 56 über, das eine Spindelmutter 57 umschließt. Die Spindel 44 weist oberhalb des Nockens 48 einen langgestreckten Abschnitt mit einem Bewegungsgewinde 58 auf, welches die Spindelmutter 57 durchgreift.

Die Funktion der insoweit betrachteten Vorrichtung ergibt sich aus dem Zusammenwirken von Spindelmutter 57, Spindel 44 und Führungsbuchse 49. Wird die Druckstange 54 vom Handgriff 55 her niedergedrückt, dann versucht zwar die Spindel 44 dem Druck von oben in der Weise nachzugeben, daß sie sich in der Spindelmutter dreht. Diese Drehbewegung wird aber zunächst dadurch verhindert, daß der Nocken 48 in der Führungsbuchse 49 mit dem Führungsschlitz 50 verdrehsicher geführt ist. Somit kann sich die Spindel nicht gegenüber der Spindelmutter 57 drehen, vielmehr führt die Spindel zunächst eine rotationsfreie Bewegung in Achsrichtung als Verlängerung der Schubstange 54 nach unten aus. Mit dieser Bewegung gelangt der Schlüsselfuß 43 in Eingriff mit dem jeweils bereitstehenden Klemmelement 1.

Sobald der Nocken 48 den Führungsschlitz 50 der Führungsbuchse 49 verlassen hat, ist die Spindel frei zu einer Drehbewegung, wobei auf die Feder 47 für eine Gegenkraft zu dem Druck der Druckstange von oben liefert. Dies führt dazu, daß die Spindelmutter der Spindel eine Drehbewegung aufzwingt, die auch über den Schlüsselfuß 43 dem Klemmelement 1 mitgeteilt wird, so daß dies sich in einen entsprechenden Untergrund einbohren kann.

Die Drehbewegung der Spindel wird durch einen Sperrfinger 59 begrenzt, der fest mit der Druckstange 54 (über das Spindelgehäuse 56) verbunden ist und mit fortschreitender Niederbewegung der Schubstange in den Drehbereich des Nockens 48 gelangt und für diesen dann einen Anschlag bildet. Damit läßt sich exakt einstellen, daß das Klemmelement nur einen ganz bestimmten Drehwinkel von z.B. 2,5 Umdrehungen ausführt und dann vollständig in den Untergrund eingeschraubt ist, ohne daß die Gefahr eines Überdrehens und damit der Verlust des gewünschten festen Sitzes des Klemmelements im Untergrund entsteht.

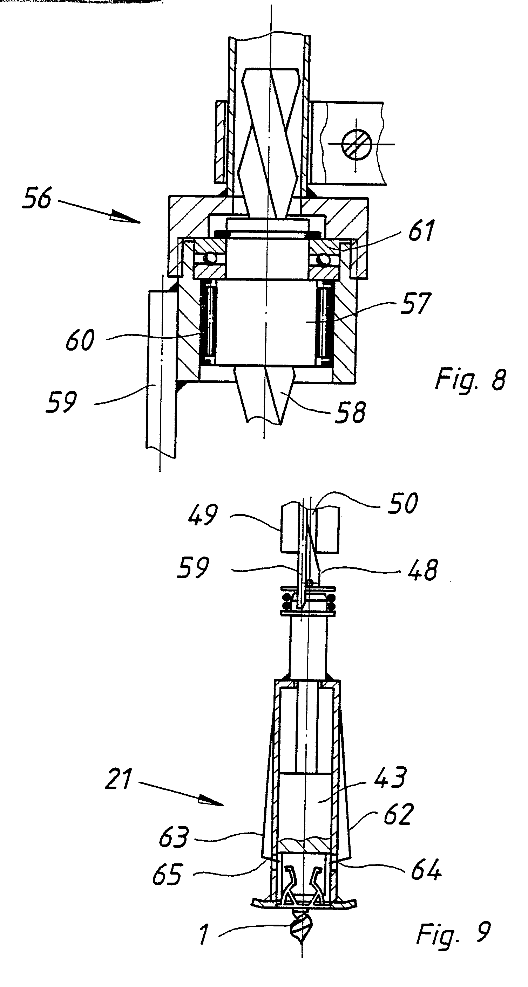

Wie aus Fig. 8 weiter ersichtlich ist, ist die Spindelmutter 57 über eine Kupplung 60 und ein Drehlager 61 in Form eines Kugellagers drehbar mit dem Spindelgehäuse 56 verbunden. Diese Drehbarkeit ist aber nur in eine Richtung, nämlich der nach oben gerichteten Rückbewegung der Druckstange 54 gegenüber der Spindel 44 vorgesehen. Die Kupplung 60 bildet bei der Rückwärtsbewegung einen Freilauf, bei der Vorbewegung jedoch einen Mitnehmer, was mit (nicht zuletzt vom Fahrrad her) bekannten Bauelementen erzielt werden kann. Bei der Rückwärtsbewegung ermöglicht der Freilauf einen Hub der Druckstange 54 gegenüber der Spindel 44 um die axiale Länge, die zuvor zum Drehen gebraucht wurde. Die Spindel führt keine Rückdrehung aus. Zur Einführung des Nockens 48 in den Führungsschlitz 50 ist dabei der Sperrfinger 59 behilflich, der beim Niedergehen in der Weise seitlich des Schlitzes 50 verläuft, daß seine Anschlagkante mit einer Kante des Schlitzes fluchtet. Bei nach oben gehender Spindel gelangt der Nocken 48 ohne weiteres in den Führungsschlitz 50 hinein.

In Fig. 9 ist die Zuordnung des Sperrfingers 59 zum Führungsschlitz 50 in der Buchse 49 am Ende der Vorschubbewegung veranschaulicht. Der Nocken 48 liegt am Sperrfinger 59 an und kann aus dieser Lage in einer rein axialen Bewegung in den Führungsschlitz 50 hineinfahren.

In Fig. 9 ist aber auch näher zu erkennen, daß die Halterung 21 mit zwei federnden Halteklauen 62,63 ausgestattet ist, die aus Federblech gebogen und in einem oberen Bereich der Halterung 21 befestigt sind, von wo sie zunächst außerhalb der Ausstoßkammer 42 nach unten und dann mit stumpf abgewinkelten Enden in die Ausstoßkammer hineinführen. Diese Enden 64,65 untergreifen ein Klemmelement 1 in seiner Ausgangslage solange, bis der Schlüsselfuß 43 das Klemmelement 1 erfaßt hat und weiter niederdrückt. Dann geben die Halteklauen 62,63 nach und weichen seitlich nach außen hin aus, so daß die Spindel das Klemmelement 1 in den Untergrund einschrauben kann. Die Halteklauen 62,63 legen das jeweils nachgeführte Klemmelement nur so stark und solange fest, wie es zur Übernahme durch den Schlüsselfuß 43 bereitstehen soll.

## Ansprüche

1. Klemmelement für eine Verankerung in Materialien geringer Zugfestigkeit, insbesondere in Isoliermaterial verankerbare Klemmschelle für Fußbodenheizungsrohre, mit einer oberseitig einen Klemmkopf mit zwei Klemmschenkeln und unterseitig einen Verankerungsteil tragenden Stützplatte, dadurch gekennzeichnet, daß der Verankerungsteil (4) als ein nach unten sich im Querschnitt verjüngender Schraubenfuß gestaltet ist und daß die Stützplatte (3) unterseitig eine Randanlage bildet und sich in Richtung der Klemmschenkel (9,10) erstreckt, wobei sie eine elastisch verformbare Verbindung zwischen den Klemmschenkeln (9,10) bildet.

2. Klemmelement nach Anspruch 1, dadurch gekennzeichnet, daß die Stützplatte (3) einen Grundriß in Form einer beidseitig der Klemmschenkel (9,10) beschnittenen Kreisfläche hat.

3. Klemmelement nach Anspruch 1 oder 2, dadurch gekennzeichnet, daß zwischen dem Schraubenfuß (4) und der Unterfläche der Stützplatte (3) eine schmale Ringnut (8) ausgebildet ist.

4. Klemmelement nach einem der Ansprüche 1 bis 3, dadurch gekennzeichnet, daß jeder Klemmschenkel (9,10) über einen biegesteifen Schenkelansatz (11,12) in die Stützplatte (3) einmündet.

5. Klemmelement nach Anspruch 4, dadurch gekennzeichnet, daß der Schenkelansatz (11,12) eine Dreieckverstrebung bildet.

6. Klemmelement nach Anspruch 4 oder 5, dadurch gekennzeichnet, daß jeder Klemmschenkel (9,10) oberhalb des Schenkelansatzes (11,12) in einen zum anderen Schenkel geneigten elastisch nachgiebigen Klammerarm (14,15) einmündet.

7. Klemmelement nach Anspruch 4,5 oder 6, dadurch gekennzeichnet, daß di-e Klemmschenkel (9,10) zwischeneinander eine sich nach unten keilformig verengende Aufnahme (13) bilden.

8. Klemmelement nach einem der Ansprüche 4 bis 7, dadurch gekennzeichnet, daß die Klemmschenkel (9,10) oberseitig in Führungsansätzen (16,17) enden, die zwischeneinander einen sich nach unten verengenden Einführbereich bilden.

9. Vorrichtung zum Verankern von Klemmelementen mit einem Klemmkopf und einem Schraubenfuß, insbesondere nach einem der Ansprüche 1 bis 8, wobei die Vorrichtung mit einem Setzwerkzeug und vorzugsweise einem vor dem Setzwerkzeug ausmündenden Magazin für Klemmelemente ausgestaltet ist, dadurch gekennzeichnet, daß das Setzwerkzeug einen Drillschaft (23,44) mit einem formschlüssig ein Klemmelement (1) am Klemmkopf (2) erfassenden Schlüsselfuß (26,43) aufweist.

10. Vorrichtung nach Anspruch 9, dadurch gekennzeichnet, daß der Drillschaft (23,44) über ein Bewegungsgewinde (27,58) zu einer kombinierten Längs- und Drehbewegung geführt ist.

11. Vorrichtung nach Anspruch 10, dadurch gekennzeichnet, daß der Drillschaft (23,44) als Spindel für eine schraubenförmige Vor- und Drehbewegung ausgebildet ist.

12. Vorrichtung nach Anspruch 11, dadurch gekennzeichnet, daß der Steigungswinkel der Spindel mit dem Bewegungsgewinde (27,58) dem des Verankerungsfußes (4) am Klemmelement (1) angeglichen ist.

13. Vorrichtung nach Anspruch 11 oder 12, dadurch gekennzeichnet, daß die Spindel einenends in eine achsiale Führung (29) übergeht.

14. Vorrichtung nach Anspruch 13, dadurch gekennzeichnet, daß die Spindel und die achsiale Führung mit einem werkzeugfesten Führungsstift (28) in Eingriff stehen.

15. Vorrichtung nach einem der Ansprüche 10 bis 14, dadurch gekennzeichnet, daß an deren dem Werkzeugkopf gegenüberliegenden Ende die Spindel (23) um mehr als die Lange des Verankerungsfußes (4) des Klemmelements (1) aus einem Gehäuse (12) des Setzwerkzeugs vorsteht und einen drehbeweglichen Betätigungskopf (Handgriff 24) trägt.

16. Vorrichtung nach Anspruch 15, dadurch gekennzeichnet, daß der Betatigungskopf als Handgriff (24) ausgebildet ist.

17. Vorrichtung nach einem der Ansprüche 9 bis 16, dadurch gekennzeichnet, daß das Magazin (36) eine vorwiegend vertikal ausgerichtete, die Klemmelemente (1) parallel zueinander führende Profilschiene (37) umfaßt, die in eine Ausstoßkammer (Halterung 21) vor dem Drillschaft mündet.

18. Vorrichtung nach Anspruch 17, dadurch gekennzeichnet, daß die Ausstoßkammer zwei Auflageschienen (34,35) umfaßt, deren Abstand voneinander größer als die kleinste Querabweisung des Klemmelements (1) ist.

19. Vorrichtung nach Anspruch 17 oder 18, dadurch gekennzeichnet, daß die Ausstoßkammer von Gehäusewänden begrenzt ist, die unterseitig Aufstellfüße (31,32) bilden.

20. Vorrichtung nach einem der Ansprüche 9 bis 19, dadurch gekennzeichnet, daß der Schlüsselfuß (26,43) prismatisch mit einer die achsialen Bewegungen zwischen Drillschaft (23,44) und Klemmelement (1) überbrückenden Lange gescaltet ist.

21. Vorrichtung nach Anspruch 9, 10 oder 11, dadurch gekennzeichnet, daß der Drillschaft (44) als Spindel ausgebildet ist, die oberenends über eine Spindelmutter (57) mit einer längsbeweglichen Druckstange (54) verbunden ist.

22. Vorrichtung nach Anspruch 21, dadurch gekennzeichnet, daß die Spindel (44) mit einer Führung (Nocken 48, Führungsschlitz 50) verbunden ist, die in einem oberen Bewegungsabschnitt eine Längsführung ohne Drehbewegung erzielt und die die Spindel hinter dem Belvegungsabschnitt zur Drehbewegung freigibt.

23. Vorrichtung nach Anspruch 21 oder 22, dadurch gekennzeichnet, daß die Druckstange (54) unverdrehbar gegenüber einem vorrichtungsfesten Rahmen (51) geführt ist.

24. Vorrichtung nach Anspruch 22 und 23, gekennzeichnet durch einen Drehanschlag für die Spindel (44), bestehend aus einem spindelfesten Nocken (48) und einem in den Umlaufbereich des Nocken (48) niedergehenden Sperrfinger (59).

25. Vorrichtung nach einem der Ansprüche 21 bis 24, dadurch gekennzeichnet, daß die Spindelmutter (57) über eine Drehkupplung (60) mit der Druckstange (54) verbunden ist, die die Spindelmutter (57) gegenüber der Druckstange (54) bei einer Rückbewegung drehbeweglich freigibt.

26. Vorrichtung nach einem der Ansprüche 21 bis 25, gekennzeichnet durch eine die Spindel (44) zur Druckstange (54) hin drückende Federung (Feder 47).

27. Vorrichtung nach einem der Ansprüche 21 bis 26 in Verbindung mit Anspruch 17, dadurch gekennzeichnet, daß die Ausstoßkammer (21,42) zumindest eine federnde Halteklaue (62,63) mit einer seitlich aus der Ausstoßkammer gerichteten Ausweichbewegung aufweist.

17

10

16 9

1

12

15

14

11

2

13

8 7

3

4

6 5

*Fig. 1*

1

*Fig. 2*

3

| 12 | 17 | | 13 | 16 | 11 |

Fig. 3

Fig. 4

Fig. 5

Neu eingereicht / Newly filed
Nouvellement déposé

*Fig. 6*

*Fig. 7*

Neu eingereicht / Newly filed
Neuvellement déposé

56

61

57

60

59

58

Fig. 8

49

50

59

48

21

43

62

63

65

64

1

Fig. 9